# EUROPÄISCHE PATENTANMELDUNG

(11) **EP 1 919 077 A2**
(43) Veröffentlichungstag der Anmeldung: **07.05.2008**
(21) Anmeldenummer: 07119484.9
(22) Anmeldetag: 29.10.2007
(51) Int. Cl.: H02P 29/00

(54) **Steuervorrichtung für den Antrieb eines mit einem geregelten Elektromotor betriebenen Dentalhandstückes**

(30) Priorität: 31.10.2006 DE 102006051507
(71) Anmelder: Kaltenbach & Voigt GmbH, 88400 Biberach (DE)
(72) Erfinder: Sauter, Johannes, 88416, Mittelbuch (DE); Bürk, Richard, 88433, Alberweiler (DE)
(74) Vertreter: Thun, Clemens

(57) **Zusammenfassung**

Die Erfindung betrifft eine Steuervorrichtung für den Antrieb eines mit einem geregelten Elektromotors 2 betriebenen Dentalhandstückes 1. Damit der Zahnarzt eine akustische Rückmeldung über die Belastung des mit dem Dentalhandstück 1 bearbeiteten Zahnes 15 hat, ist die Steuervorrichtung 7 so ausgelegt, dass die von der Belastung des Elektromotors 2 abhängige Drehzahl-Kennlinie 13, 14, ausgehend von einem Startpunkt 12, mit zunehmendem Motorstrom bzw. zunehmender Leistung abfallend ist, wobei der Startpunkt 12 und/oder die Steilheit und/oder der Verlauf der abfallenden Kennlinie 13, 14 wählbar sind/ist.

## Beschreibung

Bei mit einem ungeregelten Elektromotor betriebenen Dentalhandstück fällt die Drehzahl des Elektromotors mit zunehmender Belastung ab. Dieser Effekt ist unerwünscht, jedenfalls dann, wenn der Abfall so stark ist, dass die Schneidwirkung des Werkzeugs negativ beeinträchtigt wird. Allerdings hat der Zahnarzt durch die sich ändernde Drehzahl eine akustische Rückmeldung über die auf den Zahn ausgeübte Abtragsleistung, weil das menschliche Ohr sehr sensibel auf die Frequenzänderungen reagiert, die durch die Drehzahländerungen bedingt sind.

Inzwischen ist man dazu übergegangen, nur noch drehzahlgeregelte Elektromotoren für Dentalhandstücke einzusetzen. Bei diesen besteht jedoch die Gefahr, dass an der bearbeiteten Stelle des Zahnes eine Überhitzung und damit für den Zahn ein Schaden auftritt, wenn die Belastung durch entsprechenden Andruck des Dentalhandstückes zu groß wird oder zu lange andauert.

Der Erfindung liegt die Aufgabe zugrunde, dem Zahnarzt auch bei Dentalhandstücken mit geregeltem Elektromotor eine akustische Rückmeldung über die Belastung zukommen zu lassen.

Zur Lösung dieser Aufgabe wird die Steuervorrichtung für den Antrieb eines mit einem geregelten Elektromotor betriebenen Dentalhandstückes so ausgebildet, dass die von der Belastung des Elektromotors abhängige Drehzahl-Kennlinie, ausgehend von einem Startpunkt, mit zunehmendem Motorstrom bzw. zunehmender Leistung abfällt, wobei der Startpunkt und/oder die Steilheit und/oder der Verlauf der abfallenden Kennlinie wählbar sind/ist.

Im Gegensatz zu der bei ungeregelten Elektromotoren natürlicherweise abfallenden Kennlinie kann im Rahmen der erfindungsgemäßen Lösung gezielt eine ganz bestimmte abfallende Kennlinie eingestellt werden. Diese Kennlinie kann der Zahnarzt entsprechend den unterschiedlichen Arbeitsweisen und seinem persönlichem Empfinden wählen und einstellen.

Ein Ausführungsbeispiel der Erfindung wird nachfolgend anhand der Zeichnungen beschrieben.

Es zeigen:
- Figur 1: ein mit einem geregelten Elektromotor versehenes Dentalhandstück sowie die zugehörige Steuervorrichtung;
- Figur 2: verschiedene Kennlinien mit wahlweise einstellbaren Variationen.

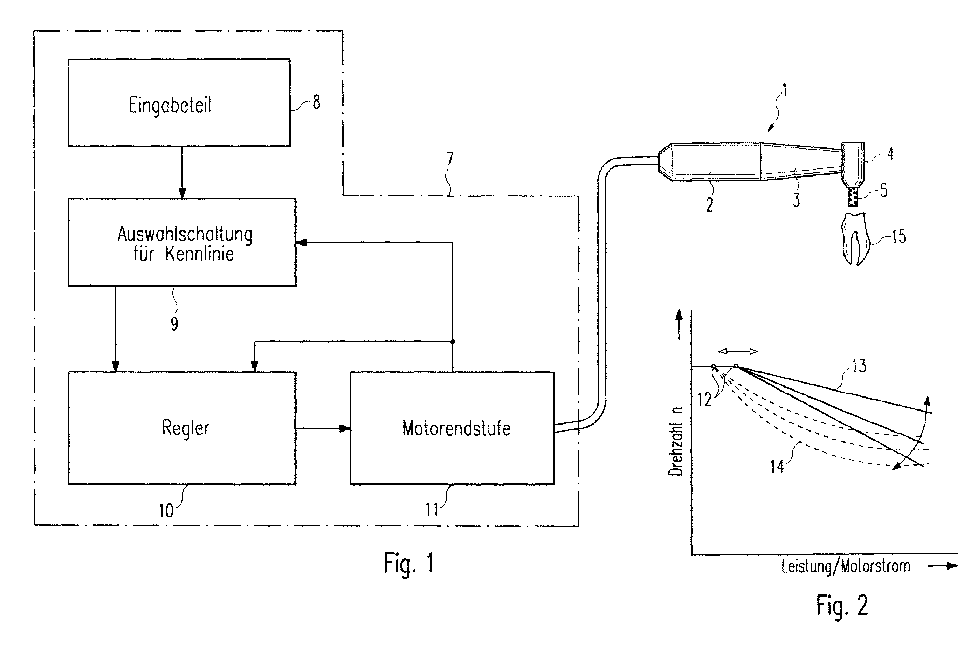

Figur 1 zeigt ein Dentalhandstück 1 mit einem einen Elektromotor enthaltenden Motorteil 2 und einem Aufsatzteil 3 an dem sich ein Kopf 4 mit einem Drchwerkzeug 5 befindet. Das Dentalhandstück 1 ist über einen Versorgungsschlauch 6 mit einer Steuervorrichtung 7 verbunden.

Zu der Steuervorrichtung 7 gehört ein Eingabeteil 8, in das Informationen über die Motorkennlinie eingegeben werden können. Diese Informationen werden in entsprechender Form als Signale an eine Auswahlschaltung 9 für die Kennlinie weitergegeben. In der Auswahlschaltung 9 sind verschiedene Kennlinien-Typen abgespeichert, die durch die in das Eingabeteil 8 eingegebenen Daten in gewünschter Weise modifiziert werden. Die modifizierte und ausgewählte Kennlinie wird von der Auswahlschaltung 9 als Sollwert an einen Regler 10 weitergegeben, der ein Stellwertsignal an eine Motorendstufe 11 liefert. Die Motorendstufe 11 liefert dann über die Versorgungsleitung 6 den Motorstrom an den Elektromotor des Dentalhandstückes 1. Der Istwert für den Regler 10 wird diesem von der Motorendstufe 11 zugeführt. Dieser Istwert wird außerdem der Auswahlschaltung 9 für die Kennlinie zur Sollwertbildung zugeführt.

Wenn das Dentalhandstück 1 mit seinem Drehwerkzeug 5 auf einen Zahn 15 aufgesetzt wird, so erhöht sich zwangsläufig der Motorstrom und damit auch die Leistung des Elektromotors.

Die in Figur 2 gezeigte Kennlinie betreffend die Abhängigkeit der Drehzahl von dem Motorstrom bzw. der Leistung zeigt, dass die Drehzahl- von einem Startpunkt 12 ausgehend- mit zunehmender Leistung abfallend ist. Der Zahnarzt kann nun durch entsprechende Daten, die er in das Eingabeteil 8 eingibt, einen bestimmten Kennlinien-Typ auswählen. In Figur 2 sind zwei verschiedene Kennlinien-Typen 13 und 14 gezeigt, die ihrerseits durch Veränderung der Steilheit variieren können. Die Steilheitsvariationen können ebenfalls durch eine entsprechende Eingabe am Eingabeteil 8 vorgewählt werden. Ferner kann von dem Zahnarzt der Startpunkt 12 vorgewählt werden, an dem der Kennlinienabfall beginnt.

In Figur 1 ist die Erfindungslösung des besseren Verständnisses wegen als hardware-Lösung dargestellt. Es versteht sich jedoch von selbst, dass mehrere oder alle Blöcke zu einem einzigen Block zusammengefasst werden können und die Realisierung der grundsätzlichen Erfindungsidee softwaremäßig erfolgt.

## Patentansprüche

1. Steuervorrichtung für den Antrieb eines mit einem geregelten Elektromotor (2) betriebenen Dentalhandstückes (1),
**dadurch gekennzeichnet,**
**dass** die von der Belastung des Elektromotors (2) abhängige Drehzahl-Kennlinie (13; 14) ausgehend von einem Startpunkt (12), mit zunehmendem Motorstrom bzw. zunehmender Leistung abfallend ist, wobei der Startpunkt (12) und/oder die Steilheit und/oder der Verlauf der abfallenden Kennlinie (13; 14) wählbar sind/ist.
